# EUROPEAN PATENT SPECIFICATION

(11) **EP 2 187 324 B1**
(45) Date of publication and mention of the grant of the patent: **28.01.2015**
(21) Application number: 08020072.8
(22) Date of filing: 18.11.2008
(51) Int. Cl.: G06F 17/30, H04L 29/08

(54) **Data storage system**
Datenspeichersystem
Système de stockage des données

(43) Date of publication of application: 19.05.2010
(73) Proprietor: Telefónica Germany GmbH & Co. OHG, 80992 München (DE)
(72) Inventor: Walter, Bernhard, 80469 München (DE)
(74) Representative: Herrmann, Uwe

(56) References cited:
- EP-A- 1 291 770
- US-A1- 2002 156 921
- US-A1- 2005 243 609

## Description

The present invention refers to a data storage system comprising a user device comprising data and a target storage system for storing said data, wherein the data storage system further comprises a first data network via which the target storage system is accessible.

Consumers need products which assist them in managing their data such as texts, photographs, documents, etc. Digital assets like photos or important documents are of high value. There is a need and it is more and more important to get these data stored in a highly secure location.

It is known from the art to use so called USB drives which are the most common back-up solution. A reason for this is that these devices are simple to use and provide a good availability regarding the stored data. However, these devices have a limited user confidence since USB drives can start getting failures and in the worst case even crash.

In particular USB drives may be subject to lightning strokes, water or fire damage which in the worst case could lead to the situation that all data are lost.

It is further known from the art to store data at a remote location such as in a server which is accessible via internet. The internet storage is a growing market but the mass market usage is limited by upload speeds. A drawback of existing solutions is that online storage services require installations and configurations as well as that existing online storage services are perceptibly slowed down by the slow upload speed of ADSL. A huge advantage of these solutions however resides in the fact that they are reliable and thus have a high degree of confidence.

Products and services shall not increase complexity in the consumer households in order to provide a high degree of acceptance by the users. They need to be understandable without technical skills and they need to have a clear functionality and value proposition.

In order to provide a high degree of usability the products need to be self-explanatory and should have no barriers for installations and for regular use. Further, it would be advantageous if the product and services would be free or merely free of maintenance.

Since of course the data to be stored is of a high importance and value for the users the products and services regarding data storage systems need to deliver exactly what they promise, they need to be 100% reliable and if possible give a clear status feedback so that the user can be sure that the data is securely stored.

It is the objection of the present invention to improve a data storage system according to the preamble portion of claim 1 so that it fulfils the requirements of simplicity, usability and confidence.

This object is solved by a data storage system according to claim 1.

The data storage system according to the present invention is characterized in that it comprises a data storage device which is adapted for receiving data from the user device, for at least temporarily storing said data and for transmitting said data to the target storage system, wherein the data storage system further comprises a second data network which is arranged for enabling transmission of said data from the user device to the data storage device, wherein said first data network is arranged for enabling transmission of said data from the data storage device to the target storage system and wherein the second data network is adapted to provide a higher data transmission rate than the first data network. Thus, the main idea of the present invention is to provide a data storage device which receives data from one or more user devices, which at least temporarily stores this data and which transmits this data to the target storage system. One important aspect of the invention is that the transmission speed of the transmission of data from the at least one user device to the data storage device is higher than the speed in which data are transmitted from this data storage device to the target storage system. A user experience is maximized thus by the fact that the data to be stored in the target storage device are rapidly sent to the data storage device so that in view of the user the storage process is finished in a comparably short period of time. Simultaneously or thereafter the data storage device commences to copy or move all of or at least a part the data stored therein to the target storage system via the first data network.

The term "network" used herein is to be understood in its broadest sense and comprises any kind of wireless connections or any kind of connections by wire between two or more than two devices or other units of the data storage system. Thus, the term network does not require a communication network connecting a plurality of devices but also encompasses in its simplest embodiment a connection by wire or wireless between two devices only.

In other words, the present invention enables a fast network connection for example at home or in an office etc. and a comparatively low connection to the remote network. The data storage device serves as a buffer between these two network seg-ments, namely between the first, slower network and the second network which provides a higher data transmission rate.

In one preferred embodiment of the present invention the second data network which is responsible for transmitting data between the at least one user device and the data storage device comprises or is a LAN. Alternatively or additionally, the first data network which is responsible for the data transmission between the data storage device in the target storage device may be or may comprise a WAN, in particular the internet.

In a preferred embodiment of the present invention, the data storage device is a local device (i. e. located in or near the home, office etc. of the user) whereas the target storage system is a remote storage device (i. e. located remote from the home, office etc. of the user). Due to the data storage device the target storage device may be used by the user as if it would be local.

The present invention combines the aforementioned advantages of simplicity since the user is only required to install the data storage device and usability since the data storage device may be of a very simple construction and confidence since the data storage is finally performed by a target storage system which has a high degree of confidence.

In a further embodiment of the present invention the data storage device is adapted to store all the data or at least a portion of the data only temporarily before the data are transmitted from the data storage device to the target storage system. Thus, there is an intermediate data storage in the data storage device before upload into the target storage system.

Due to the fact that the second data transmission system is adapted to provide a higher data transmission rate than the first data network it is possible to copy data from the source, i. e. from the user device such as a computer, mobile phone, etc. to the data storage device in for example LAN speed which leads to a perceived higher usability for the user. The device then copies or moves the data in for example WAN speed to the target storage system.

It is further possible to use the data storage device for at least temporarily storing data which are downloaded from the target storage system for faster access. The storage capacity is of course limited by the storage or cache size.

In a preferred embodiment of the present invention the data storage device uses a cache strategy (e. g. at least recently used) in order to keep a copy of the relevant data or a part thereof in the local memory of the data storage device for a faster access by the user. Of course this ability of the data storage device is limited by the cache size.

In case the cache is full with data to be uploaded into the target storage device the data storage device may reduce the input bandwidth, i. e. the speed of transmission of data from the user device to the data storage device in order to ensure that the user gets a continued service. The input bandwidth can be reduced for example to the output bandwidth with which the data transmission takes place from the data storage device to the target storage system.

The data storage device may use different strategies for upload to the target storage system such as immediately, priority based, over night, etc. It may be conceivable that the strategy may be chosen by the user.

In a further embodiment of the present invention of the data storage device is a hardware solution. It may be independent from a router and/or a DSL-modem (standalone) or it may be integrated into these devices.

The communication from and to the data storage device and/or to and from the target storage system may be wireless or by wire. The data storage device thus may be connected to a single user device or more than one user device via a wire or wireless, so that in this case the second network is represented by a wire or more than one wire or by a wireless communication between two or more than two communication partners.

It is furthermore preferred that the data storage device can be simply replaced in case of failure. A very high degree of reliability may be obtained in case that the data storage device has no mechanical moved parts like hard discs and fans to ensure robustness and silence.

The storage (cache) of the data storage device can have a restricted amount of memory (volatile or not volatile) while serving for unlimited amount of data to the target storage system.

It is further preferred that the data storage device needs significant low power, for example 10 - 20 W which is 1/10 - 1/20 of a usual computer hardware.

The data storage device may further be adapted to be extensible for example by the user of different memory modules or network modules.

It is further conceivable that the data storage device may be manageable remotely for example by a operator of the data storage system.

As mentioned before the data storage device may be adapted to communicate either directly or indirectly (for example via a router or modem) with a user device or with a plurality of identical or different types of user devices either wireless or by wire. It may be conceivable that the data storage system for example is not only adapted to communicate with a computer but also with other data storage systems such as cameras, mobile phones, etc.

The data storage device may be a proxy for the data in the target storage device.

In a preferred embodiment the data storage device is preconfigured for each user to a user specific pre-defined storage location in the target storage system. Preferably, the data storage device is simple to install by the user and does not necessitate complex installations and configurations. It is preferred if the data storage device is auto-detected by any computer or any other data storage device.

In accordance to a further embodiment of the present invention the data storage device may optionally encrypt uploaded data with a key having for example a strong cryptography. The key may be given by the user and may not be forwarded to the target storage system.

However, it is also conceivable that the user may chose consciously to forward the encryption key to another party or system for key escrow for example to the target storage device or to any device which is connected therewith.

In accordance to a further embodiment of the present invention the data storage device may allow to change the encryption key for existing and/or new data.

The data storage device may be adapted to authenticate and authorize the user to access the target storage system either by means of a device ID, i. e. by a ID of the data storage device or for example by means of an ID card, such as a SIM card. This may be supported by an automatic configuration capability in the target storage system.

In order to provide the user with information regarding the status of the upload or download of data it may be conceivable that the data storage device or any device connected therewith signals progress and status back to any client such as to an external display of a program on the user's pc, mobile phone, camera, etc. It is conceivable that the data storage device for example has a display or any other indication means which shows to the user that the progress of receiving data from the user device has been finished or is in progress and/or that the progress of transmitting data from the data storage device to the target storage system is in progress or has been finished. The same refers to transmission of data in the other direction, i. e. in case of download from data from the target storage system to the data storage device and/or from the data storage device to the user device.

The data storage device may support standard network protocols to show itself to the user in any relevant device operating systems.

As mentioned above, the target storage system serves as a secure storage for any customer's data, independent on the kind of data such as pictures, music files, documents, etc.

As also mentioned before the data may be encrypted when sent to the target storage device. The target storage device may act as a key escrow for the user's encryption key(s). In a preferred embodiment of the present invention the target storage system allows every authenticated user to access data either via the user device for example at home (encrypted and clear data) and/or directly via other interfaces from the target storage system, e. g. ftp, web front and etc. and in these cases there may be provided clear data or encrypted data when the target storage system acts as a key escrow for the specific user.

In addition or alternatively the target storage system optionally supports a set of open API's in order to access user's data in a authorized and secure way which is suitable for a third party and crowd sourced applications.

As mentioned above, the target storage system optionally supports to share data with other users and allows the data access not only via the data storage device but also via other interfaces such as via internet through authenticated users.

The data storage device might by adapted not only to communicate with one user device or with one type of user device but may also be able to communicate with a plurality of user devices or with a plurality of different user devices such as computers, cameras, mobile phones, etc.

In those cases it is adapted to synchronize data from different types of user devices.

The connectivity with these devices is either wireless, for example via Bluetooth, WIFI, etc. or via cable (USB, etc.).

In those cases the target storage system may serve as a device data base which stores connection parameters, communication protocols, data access information etc. and the data storage device retrieves those information which are necessary for communicating with different types of user devices from the target storage system for each connected device.

In a further embodiment the data storage system may serve the file server shares for SOHO computers. SOHO's have the advantage not to operate a file server. In this case, the data storage device may serve as a file server share and in those cases it may be enhanced by a hard disc to increase the cache size.

The data storage device may be connected wireless or by wire for example to an ADSL router or to a similar kind of transmission device which is responsible for receiving and transmitting data from and to the user devices and the target storage system.

In a further preferred embodiment of the present invention the data storage device is automatically visible for all common operating systems and connected to a unique pre-defined storage location in the target storage system. The content of the stored data in the data storage device and/or in the target storage system may be retrievable and visible to the user for example on a computer screen for example as part of a directory of a file directory system.

Further embodiments and advantages of the present invention are explained with reference to the following drawings: The figures show:
- Figure 1:: a schematical overview of a data transmission between user devices and a target storage system via the data storage device,
- Figure 2:: a schematical overview of data transmission between a user device and a data storage system with the option to retrieve data via the first data network without use of the data storage device,
- Figure 3:: a schematical overview of the data transmission between different types of user devices and a target storage device by use of the data storage device,
- Figure 4:: a schematical overview of the use of the data storage device in connection with a SOHO LAN and
- Figure 5:: a schematical representation of the data storage device and its connection to a ADSL router.

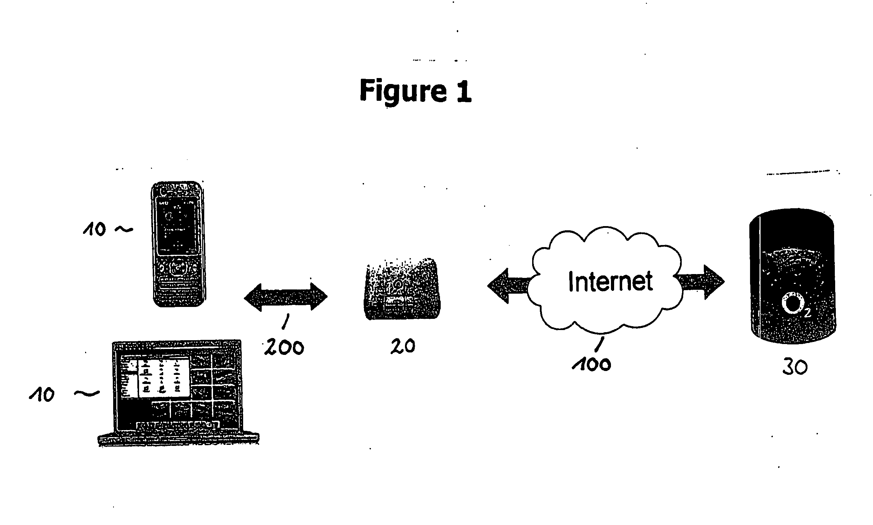

Figure 1 shows two different user devices 10 in form of a mobile phone and a computer. The number and kind of user devices 10 is not limited and in particular is not limited to those shown in figure 1. User devices can be any devices which are able to transmit data to the data storage device 20 and/or receive data therefrom.

Reference numeral 20 represents a data storage device which is a pure cache and which stores data from the user devices 10 temporarily.

The data storage device 20 communicates with the user devices 10 via a second data network 200 which for example might be a LAN.

The data storage device 20 stores the data which have been received from the at least one user device 10 intermediate before they are uploaded to the target storage system 30. The data are copied from the data storage device 20 to the target storage system 30 via a first data network 100 which might for example be the ternet of any other WAN. In accordance to the present invention the speed by which data is transmitted between the user devices 10 and the data storage device 20 is higher than the speed by which a data transmission takes place between the data storage device 20 and the target storage system 30.

Thus, reference numeral 100 represents for example a slow WAN data transmission and reference numeral 200 for example a fast LAN data transmission.

The advantage which resides in the system shown in figure 1 that the is transmission of data from the user devices proceeds rapidly and further that the data is stored with high confidence and secure in the target storage system 30.

In order to allow a fast access of data from the data storage device 20 to the user device(s) 10 it is possible that the data storage device 20 uses a cache strategy in order to keep a copy of relevant data, for example of those data which has been least recently used in its local memory.

The upload of data from the data storage device 20 to the target storage system 30 may be immediately, delayed, priority based, restricted to certain time frames such as over night, etc.

In a preferred embodiment of the invention the data storage device is a very simple hardware solution which may communicate wireless or by wire, which may be simply replaced in case of failure which may have a restricted amount of memory although serving for unlimited amount of data from and to the target storage system 30. It is preferably made very reliable due to the fact that it has no mechanical parts like hard discs and fans, etc. to ensure robustness and silence.

In case that the memory of the data storage device is not sufficient it may be conceivable that the memory is expansible.

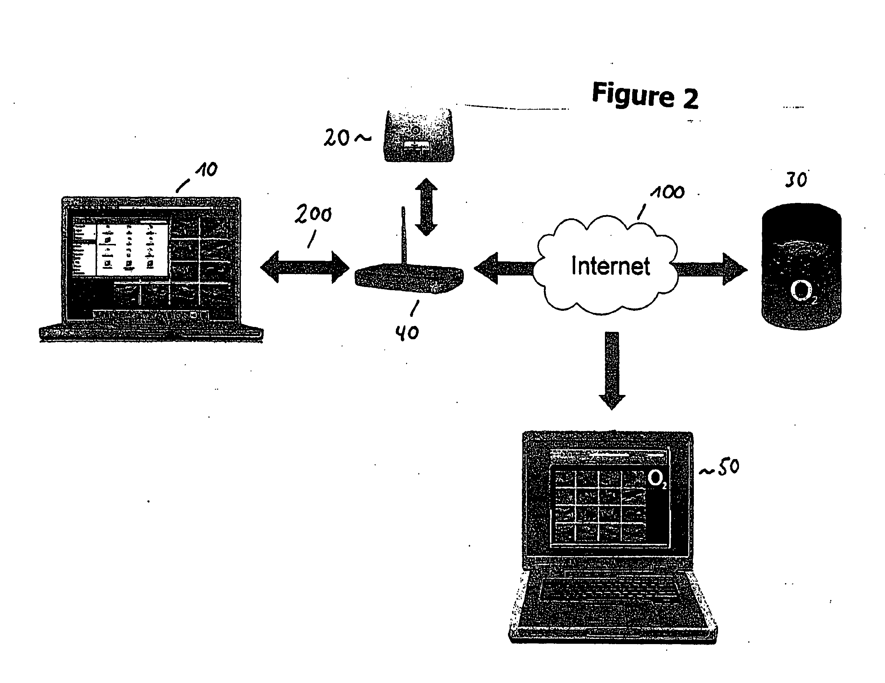

As shown in figure 2 the data storage device 20 may communicate with a DSL or ADSL modem 40 either by wire or wireless.

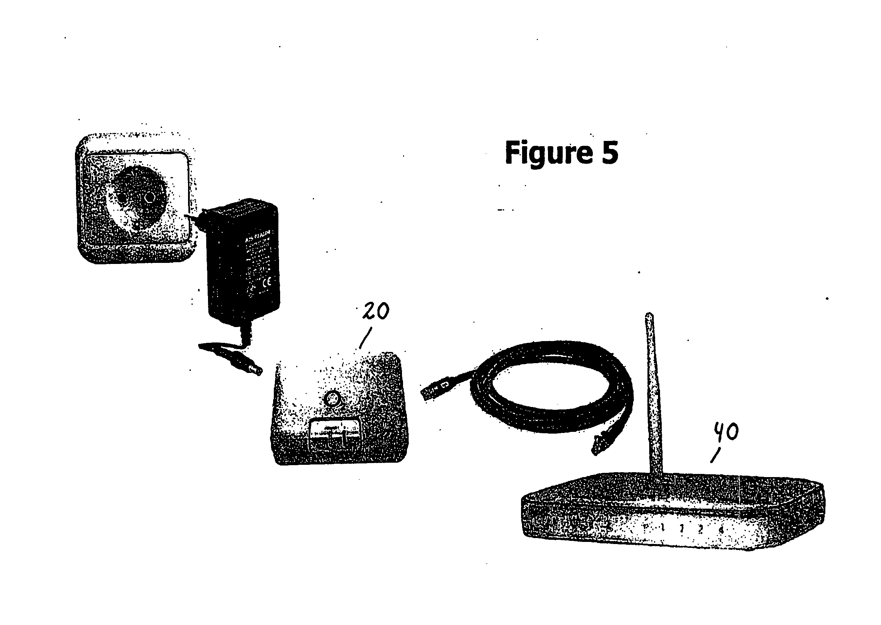

In the configuration shown in figure 5 the communication between the data storage device 20 and the modem 40 is made via a wired connection.

As further shown in figure 5 the data storage device 20 is a simple hardware solution which merely needs to be connected to a power supply and further to be connected to a modem 40.

As shown in figure 2 the modem 40 can be responsible for communication with the user device 10 as well as with the target storage system 30. However, in other cases, such as for example in case of USB or Bluetooth, it is conceivable that there is no modem inbetween.

Thus, the communication between the user device 10 and the data storage device 20 and/or the communication between the target storage system 40 and the data storage device 20 may be directly or indirectly, for example via a modem 40, a router or any other conceivable device which might fulfil this task.

Figure 2 further shows that the data which are stored in the target storage system 30 may be accessible anywhere provided the user is authorized to access data. In the situation shown in figure 2 a further client computer 40 is authorised to obtain data via the first data network 100 or via any other suitable network from the target storage system 30. Thus, retrieval of data from the target storage system 30 has not necessarily to be made via the data storage device 20.

Figure 2 shows a computer 50 as usage option for obtaining data from the target storage system 30. It may be any other device such a connected TV, computers in an internet café, laptops, etc.

In any case, it is possible according to the embodiment in figure 2 to access data anywhere, any time from any network enabled device.

The kind of data is also not limited and for example may comprise photos as a gallery, music in player, etc.

In a preferred embodiment of the invention the data storage device 20 is able to synchronise data from different kinds of devices 10 like cameras, mobile phones, etc. The connectivity with these devices is either wireless or via cable.

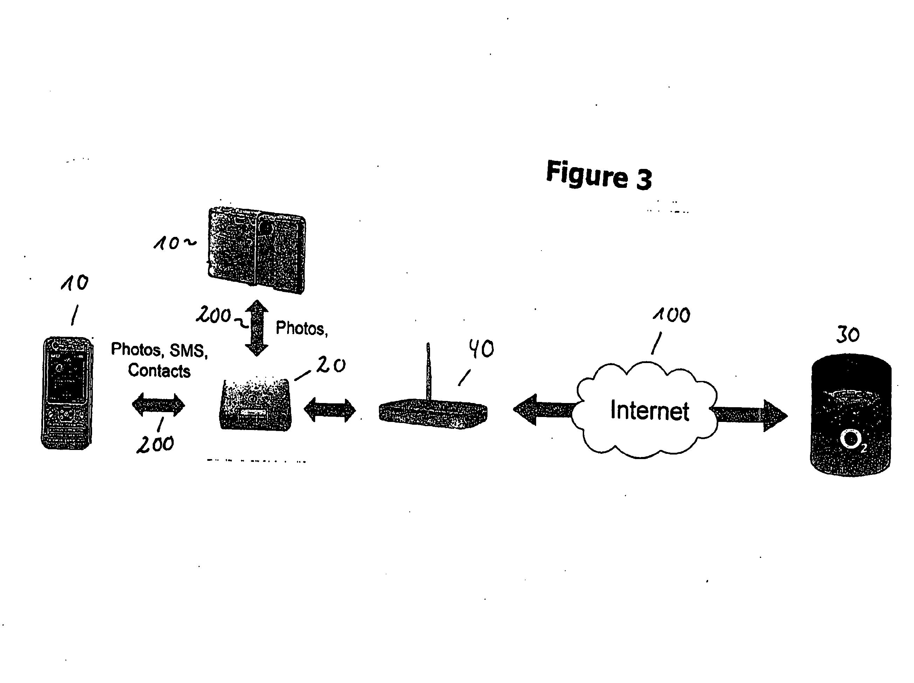

In the situation shown in figure 3 the target storage system 30 may need to serve as a device data base which provides connection parameters, communication protocols, data access information, etc. and the data storage device retrieves the information from the target storage system 30 for every connected device 10.

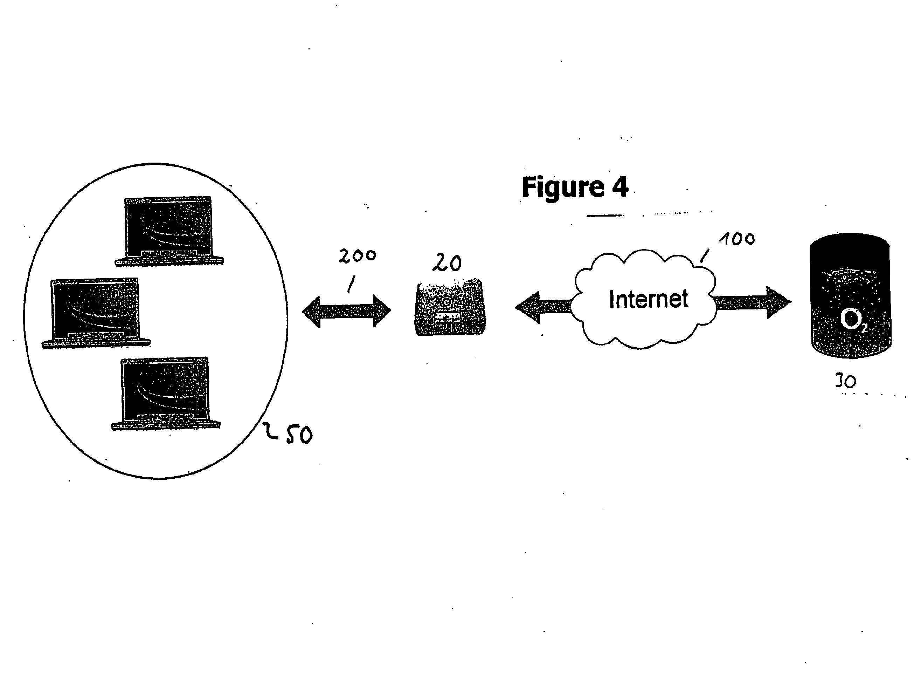

Figure 4 shows a situation in which the data storage device 20 is in use for serving a SOHO LAN 60. SOHO's have the advantage not to operate a file server. In this case, the data storage device 20 serves the file servers shares for the SOHO computers of the SOHO LAN. The way of data transmission between the SOHO LAN computers and the data storage device 20 as well as the communication between the data storage device 20 and the target storage system 30 corresponds to the situation for example shown in figure 1 namely via a second data network 200 which allows for a higher transmission speed than the first data network 100.

Finally, figure 5 shows the data storage device 20 which is of a simple construction. It is a hardware solution which requires a power supply. In the embodiment of figure 5 it is connected via a cable to a ADSL modem 40. Alternatively or additionally it may communicate with the user devices 10 and/or with a target storage device via a corresponding network directly without an ADSL modem. In other words, means for transmitting and/or receiving data may be integrated into the data storage device 20.

Preferably, the data storage device 20 supports any type of data such as photos, music, movies, documents. It may be also detected by any computer. It is preferably a plug and play solution and thus requires zero or merely zero configuration or administration so that it represents a simple and user friendly solution.

## Claims

1. Data storage system comprising a user device (10) comprising data and a target storage system (30) for storing said data, wherein the data storage system further comprises a first data network (100) via which the target storage system (30) is accessible, wherein the data storage system further comprises a data storage device (20) which is adapted for receiving data from the user device (10), storing said data and transmitting said data to the target storage system (30), wherein the data storage device (20) is adapted to store all said data or at least a part of said data only temporarily, wherein the data storage system further comprises a second data network (200) which is arranged for enabling transmission of said data from the user device (10) to the data storage device (20), wherein said first data network (100) is arranged for enabling transmission of said data from the data storage device (20) to the target storage system (30) and wherein the second data network (200) is adapted to provide a higher data transmission rate than the first data network (100).

2. Data storage system according to claim 1, wherein the second data network (200) is or comprises a LAN, a Bluetooth connection or USB wired connection and/or wherein the first data network (100) is or comprises a WAN, in particular the Internet.

3. Data storage system according to any one of the preceding claims, wherein the data storage device (20) is adapted to store data which have been transmitted from the target storage system (30) to the data storage device (20) either permanently or temporary.

4. Data storage system according to any one of the preceding claims wherein the data storage device (20) is adapted to store data based on predetermined criteria, such as least recently used data.

5. Data storage system according to any one of the preceding claims, wherein the data storage device (20) and/or the second data network (200) is adapted to limit the speed of transmission of data from the user device (10) to the data storage device (20).

6. Data storage system according to anyone of the preceding claims, wherein the data storage device (20) is a standalone hardware solution and/or that the data storage device (20) is independent from a Router or a DSL-modem (40) or is integrated into the Router or a DSL-modem (40).

7. Data storage system according to anyone of the preceding claims, wherein the data storage device (20) is adapted to indirectly or directly communicate with the user device (10) and/or with a plurality of identical or different user devices (10) preferably wireless or by wire.

8. Data storage system according to anyone of the preceding claims, wherein the data storage device (20) is preconfigured for each user to a user specific pre-defined storage location in the target storage device (30).

9. Data storage system according to anyone of the preceding claims, wherein the data storage device (20) is adapted to optionally encrypt data which is transmitted to the target storage device (30) and that the target storage device (30) can optionally act as a key escrow for users encryption keys.

10. Data storage system according to anyone of the preceding claims, wherein the data storage device (20) is adapted to authenticate and authorize the user to access the target storage device (30) by means of a device ID or by means of an ID card, such as a SIM card.

11. Data storage system according to anyone of the preceding claims, wherein the data storage device (20) is adapted to signal progress and/or status of data transmission from or to the user device (10) and/or from or to the target storage system (30).

12. Data storage system according to anyone of the preceding claims, wherein the target storage system (30) is adapted to allow an authenticated user to access data via the user device (10) or via other interfaces.

13. Data storage system according to anyone of the preceding claims, wherein the data storage device (20) is adapted to synchronize data from different types of user devices (10).

## Patentansprüche

1. Datenspeichersystem, welches eine Nutzereinrichtung (10) mit Daten und ein Zielspeichersystem (30) zum Speichern der Daten umfasst, wobei das Datenspeichersystem weiterhin ein erstes Datennetzwerk (100) umfasst, mittels dessen auf das Zielspeichersystem (30) zugegriffen werden kann, wobei das Datenspeichersystem weiterhin eine Datenspeichereinrichtung (20) umfasst, die zum Empfangen von Daten von der Nutzereinrichtung (10), Speichern der Daten und Übertragen der Daten zu dem Zielspeichersystem (30) ausgelegt ist, wobei die Datenspeichereinrichtung (20) ausgelegt ist, um alle Daten oder zumindest einen Teil der Daten nur zeitweilig zu speichern, wobei das Datenspeichersystem weiterhin ein zweites Datennetzwerk (200) umfasst, das zum Ermöglichen des Übertragens der Daten von der Nutzereinrichtung (10) zu der Datenspeichervorrichtung (20) ausgelegt ist, wobei das erste Datennetzwerk (100) zum Ermöglichen des Übertragens der Daten von der Datenspeichereinrichtung (20) zu dem Zielspeichersystem (30) ausgelegt ist und wobei das zweite Datennetzwerk (200) ausgelegt ist, um eine höhere Datenübertragungsrate als das erste Datennetzwerk (100) vorzusehen.

2. Datenspeichersystem nach Anspruch 1, wobei das zweite Datennetzwerk (200) ein LAN, eine Bluetooth-Verbindung oder eine USB-Drahtverbindung ist oder umfasst und/oder wobei das erste Datennetzwerk (100) ein WAN, insbesondere das Internet, ist oder umfasst.

3. Datenspeichersystem nach einem der vorhergehenden Ansprüche, wobei die Datenspeichereinrichtung (20) ausgelegt ist, um Daten zu speichern, die von dem Zielspeichersystem (30) zu der Datenspeichereinrichtung (20) entweder permanent oder zeitweilig übertragen wurden.

4. Datenspeichersystem nach einem der vorhergehenden Ansprüche, wobei die Datenspeichereinrichtung (20) ausgelegt ist, um Daten beruhend auf vorbestimmten Kriterien, wie etwa kürzlich verwendeten Daten, zu speichern.

5. Datenspeichersystem nach einem der vorhergehenden Ansprüche, wobei die Datenspeichereinrichtung (20) und/oder das zweite Datennetzwerk (200) ausgelegt ist, um die Geschwindigkeit der Übertragung von Daten von der Nutzereinrichtung (10) zu der Datenspeichereinrichtung (20) zu beschränken.

6. Datenspeichersystem nach einem der vorhergehenden Ansprüche, wobei die Datenspeichereinrichtung (20) eine eigenständige Hardware-Lösung ist und/oder dass die Datenspeichereinrichtung (20) unabhängig von einem Router oder einem DSL-Modem (40) ist oder in den Router oder ein DSL-Modem (40) integriert ist.

7. Datenspeichersystem nach einem der vorhergehenden Ansprüche, wobei die Datenspeichereinrichtung (20) ausgelegt ist, um indirekt oder direkt mit der Nutzereinrichtung (10) und/oder mit mehreren identischen oder unterschiedlichen Nutzereinrichtungen (10) vorzugsweise drahtlos oder drahtgebunden zu kommunizieren.

8. Datenspeichersystem nach einem der vorhergehenden Ansprüche, wobei die Datenspeichereinrichtung (20) für jeden Nutzer zu einem nutzerspezifischen vorab festgelegten Speicherort in der Zielspeichereinrichtung (30) vorkonfiguriert ist.

9. Datenspeichersystem nach einem der vorhergehenden Ansprüche, wobei die Datenspeichereinrichtung (20) ausgelegt ist, um optional Daten zu verschlüsseln, die zu der Zielspeichereinrichtung (30) übertragen werden, und dass die Zielspeichereinrichtung (30) optional als Schlüsselhinterlegung für Nutzerverschlüsselungsschlüssel dienen kann.

10. Datenspeichersystem nach einem der vorhergehenden Ansprüche, wobei die Datenspeichereinrichtung (20) ausgelegt ist, um den Nutzer mittels einer Einrichtungs-ID oder mittels einer ID-Karte, wie etwa einer SIM-Karte, zu authentisieren und autorisieren, auf die Zielspeichereinrichtung (30) zuzugreifen.

11. Datenspeichersystem nach einem der vorhergehenden Ansprüche, wobei die Datenspeichereinrichtung (20) ausgelegt ist, um das Fortschreiten und/oder den Status einer Datenübertragung von oder zu der Nutzereinrichtung (10) und/oder von oder zu dem Zielspeichersystem (30) zu signalisieren.

12. Datenspeichersystem nach einem der vorhergehenden Ansprüche, wobei das Zielspeichersystem (30) ausgelegt ist, um einem authentisierten Nutzer das Zugreifen auf Daten mittels der Nutzereinrichtung (10) oder mittels anderer Schnittstellen zu erlauben.

13. Datenspeichersystem nach einem der vorhergehenden Ansprüche, wobei die Datenspeichereinrichtung (20) ausgelegt ist, um Daten von anderen Arten von Nutzereinrichtungen (10) zu synchronisieren.

## Revendications

1. Système de stockage de données comprenant un dispositif utilisateur (10) comprenant des données et un système de stockage cible (30) pour stocker lesdites données, dans lequel le système de stockage de données comprend en outre un premier réseau de données (100) par l'intermédiaire duquel le système de stockage cible (30) est accessible, le système de stockage de données comprenant en outre un dispositif de stockage de données (20) qui est adapté pour recevoir des données du dispositif utilisateur (10), stocker lesdites données et transmettre lesdites données au système de stockage cible (30), le dispositif de stockage de données (20) étant adapté pour enregistrer toutes lesdites données ou au moins une partie desdites données seulement temporairement, le système de stockage de données comprenant en outre un second réseau de données (200) qui est agencé pour permettre la transmission desdites données du dispositif utilisateur (10) au dispositif de stockage de données (20), ledit premier réseau de données (100) étant agencé pour permettre la transmission desdites données du dispositif de stockage de données (20) au système de stockage cible (30) et le second réseau de données (200) étant adapté pour fournir une vitesse de transmission de données supérieure à celle du premier réseau de données (100).

2. Système de stockage de données selon la revendication 1, dans lequel le second réseau de données (200) est ou comprend un réseau local, une liaison Bluetooth ou une liaison par câble USB et/ou dans lequel le premier réseau de données (100) est ou comprend un réseau étendu, en particulier Internet.

3. Système de stockage de données selon l'une quelconque des revendications précédentes, dans lequel le dispositif de stockage de données (20) est adapté pour stocker des données qui ont été transmises du système de stockage cible (30) au dispositif de stockage de données (20) soit de manière permanente soit temporairement.

4. Système de stockage de données selon l'une quelconque des revendications précédentes, dans lequel le dispositif de stockage de données (20) est adapté pour stocker des données sur la base de critères prédéterminés, tels que les données utilisées le moins récemment.

5. Système de stockage de données selon l'une quelconque des revendications précédentes, dans lequel le dispositif de stockage de données (20) et/ou le second réseau de données (200) est/sont adapté(s) pour limiter la vitesse de transmission de données du dispositif utilisateur (10) au dispositif de stockage de données (20).

6. Système de stockage de données selon l'une quelconque des revendications précédentes, dans lequel le dispositif de stockage de données (20) est une solution matérielle autonome et/ou le dispositif de stockage de données (20) est indépendant d'un routeur ou d'un modem DSL (40) ou est intégré dans le routeur ou un modem DSL (40).

7. Système de stockage de données selon l'une quelconque des revendications précédentes, dans lequel le dispositif de stockage de données (20) est adapté pour communiquer indirectement ou directement de préférence sans fil ou par câble avec le dispositif utilisateur (10) et/ou avec une pluralité de dispositifs utilisateurs (10) identiques ou différents.

8. Système de stockage de données selon l'une quelconque des revendications précédentes, dans lequel le dispositif de stockage de données (20) est préconfiguré pour chaque utilisateur pour un emplacement de stockage prédéfini spécifique à l'utilisateur dans le dispositif de stockage cible (30).

9. Système de stockage de données selon l'une quelconque des revendications précédentes, dans lequel le dispositif de stockage de données (20) est adapté pour chiffrer de manière optionnelle des données qui sont transmises au dispositif de stockage cible (30) et le dispositif de stockage cible (30) peut agir de manière optionnelle comme tiers de confiance pour des clés de chiffrement d'utilisateurs.

10. Système de stockage de données selon l'une quelconque des revendications précédentes, dans lequel le dispositif de stockage de données (20) est adapté pour authentifier l'utilisateur et l'autoriser à accéder au dispositif de stockage cible (30) au moyen d'un identifiant de dispositif ou au moyen d'une carte identifiant, telle qu'une carte SIM.

11. Système de stockage de données selon l'une quelconque des revendications précédentes, dans lequel le dispositif de stockage de données (20) est adapté pour signaler la progression et/ou l'état de la transmission de données en provenance ou à destination du dispositif utilisateur (10) et/ou en provenance ou à destination du système de stockage cible (30).

12. Système de stockage de données selon l'une quelconque des revendications précédentes, dans lequel le système de stockage cible (30) est adapté pour permettre à un utilisateur authentifié d'accéder à des données par l'intermédiaire du dispositif utilisateur (10) ou par l'intermédiaire d'autres interfaces.

13. Système de stockage de données selon l'une quelconque des revendications précédentes, dans lequel le dispositif de stockage de données (20) est adapté pour synchroniser des données de différents types de dispositifs utilisateurs (10).
